# EUROPEAN PATENT APPLICATION

(11) **EP 4 656 422 A1**
(43) Date of publication of application: **03.12.2025**
(21) Application number: 24464011.6
(22) Date of filing: 10.12.2024
(51) Int. Cl.: B60J 3/04

(54) **SUNSHADE SYSTEM WITH DYNAMIC ADJUSTMENT FOR VEHICLES WINDSCREEN**

(30) Priority: 28.05.2024 RO 202400274
(71) Applicant: Stefan cel Mare University of Suceava, 720229 Suceava, County Suceava (RO)
(72) Inventor: Bejenar, Ciprian, mun. Suceava, SV (RO); Leonte, Alexandru, sat Tolesti, com. Forãsti, SV (RO); Milici, Laurentiu-Dan, sat Lisaura, com. Ipotesti, SV (RO); Pascan, Andrei-Emanuel, sat Pârtestii de Jos, com. Pârtestii de Jos, SV (RO); Dimian, Mihai, mun. Suceava, SV (RO); Irimia, Daniela, mun. Suceava, SV (RO); Ungureanu, Constantin, mun. Suceava, SV (RO); Afanasov, Ciprian, sat Lipoveni, com. Mitocu Dragomirnei, SV (RO)

(57) **Abstract**

***Summary:*** Sunshade system with dynamic adjustment for vehicles windscreen, assumes the gradual controlled shading, in the vertical plane of the windscreen, by progressively power supplying the elements arranged stratified in a package of films, transparent when not powered and opaque when powered, both manually, depending on the user's will, as well as automatically, depending on the elevation angle of the sun and vehicle towards the horizontal plane, so as to provide a distinctive alternative for the construction of sunshades adjacent to the vehicles windscreen.

## Description

The invention relates to a sunshade system with dynamic adjustment for vehicles windscreen, designed to increase the comfort and safety of front-seat passengers, through an effortlessly adjustable assembly, which involves liquid crystal films dispersed between conductive polymer layers.

In the purpose of solar protection at the level of vehicles windscreen, several solutions are known (CN207565287U, CN205736827U, EP1791707B1) which consists, mainly, of shading screens placed in the upper area of frontal viewing angle of the passengers, in the form of mechanically adjustable rollers, with a freely set shading effect, or of some chemically polarized layers, with a filter effect for diurnal and nocturnal light, or of electrically polarizable films, with a zonal shading effect, but constant and in adjacent steps, made so that the intensity of the shadow is distributed homogeneously over the vertical plane.

Some of the disadvantages of the described solutions are related to that, they either require effort to be actuated, or modify the chromatic range of colors perceived by the viewer, or the shading effect produced is static and/or does not have automatic adjustment depending on the angle of sunlight, they can detach or fragment in the eventuality of an impact and can cause accidents in case of dangerous events, due to their shapes, mechanical resistance or their own mass, and at the same time do not present a constructive unit that combines the use of several solutions.

The invention solves, mainly, the technical problems in that, it assumes a sunshade system that can be attached to the vehicle windscreen, which is actuated effortlessly, preserves the chromatic range of the image in the transparent state and produces a zonal shading effect, but dynamic and in overlapping steps, the intensity of the shadow is distributed inhomogeneous on the vertical plane, so that it disposes of automatic adjustment depending on the angle of the incident light, for which the specific constructive form offers extended comfort and safety.

Sunshade system with dynamic adjustment for vehicles windscreen, according to the invention, it surprises the presented disadvantages and problems, in that it assumes, mainly, the increase of visual comfort, due to the possibilities of shading control in vertical plane of visible area of the front-seated passengers, by progressively power supplying the elements arranged stratified in zones with films, transparent when not powered and opaque when powered, both manually, depending on the user's will, as well as automatically, depending on the elevation angle of the sun and vehicle towards the horizontal plane, so as to provide a distinctive alternative for the construction of sunshades associated to the vehicles windscreen.

The invention has the following advantages:
- The system introduces new possibilities for construction of sunshades with dynamic and progressive adjustment, for vehicles windscreen;
- The system integrates electrical drive elements of increased reliability to mechanical variants;
- The system preserves the chromatic range of colors perceived in the transparent state;
- The system produces a zonal shading effect in overlapping steps;
- The system can be adjusted effortlessly, depending on the elevation angle of the sun and the vehicle;
- The system increases road safety by being able to be applied to any windscreen of a vehicle, train, flight system or watercraft, with passengers;
- The system does not lose its properties due to wear and does not require maintenance.

Below is further given an embodiment of the invention in connection with the following figures:

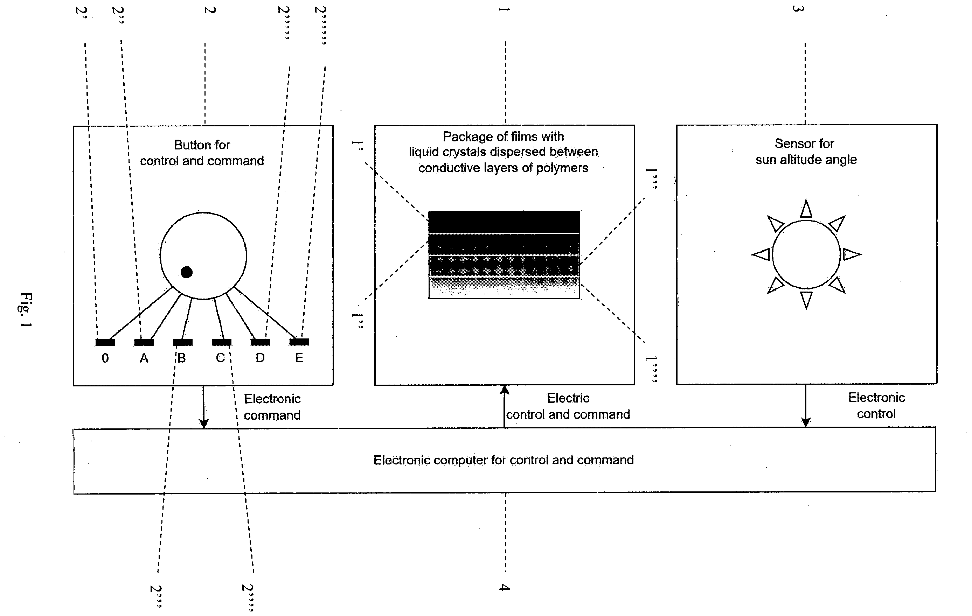

- Fig. 1 - General diagram of the sunshade system with dynamic adjustment for vehicles windscreen;

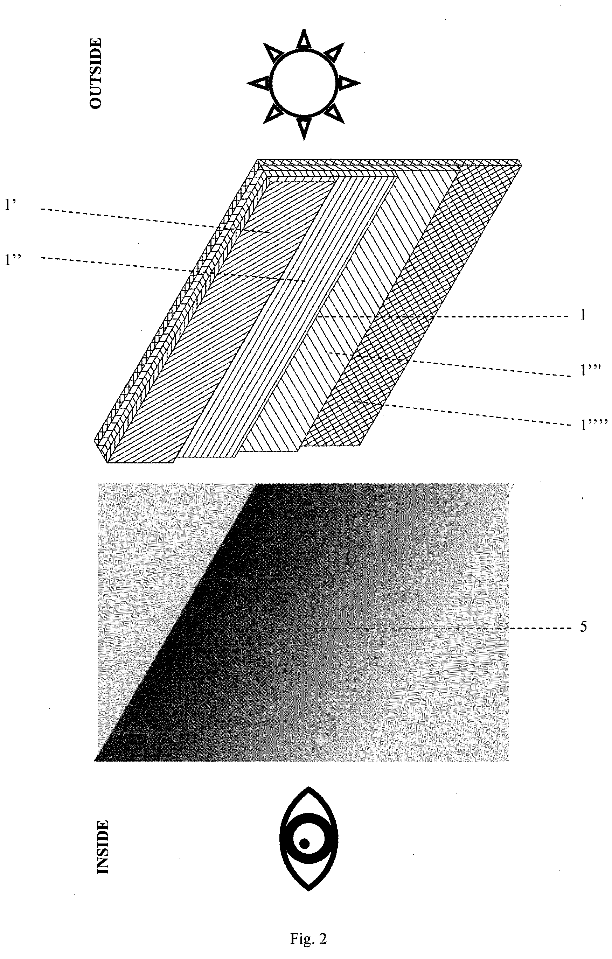

- Fig. 2 - Dynamically adjustable sunshade element, in the form of a stratified package of liquid crystals films dispersed between conductive layers of polymers (or *Polymer-Dispersed Liquid Crystal*)*,* construction detail, perspective view;

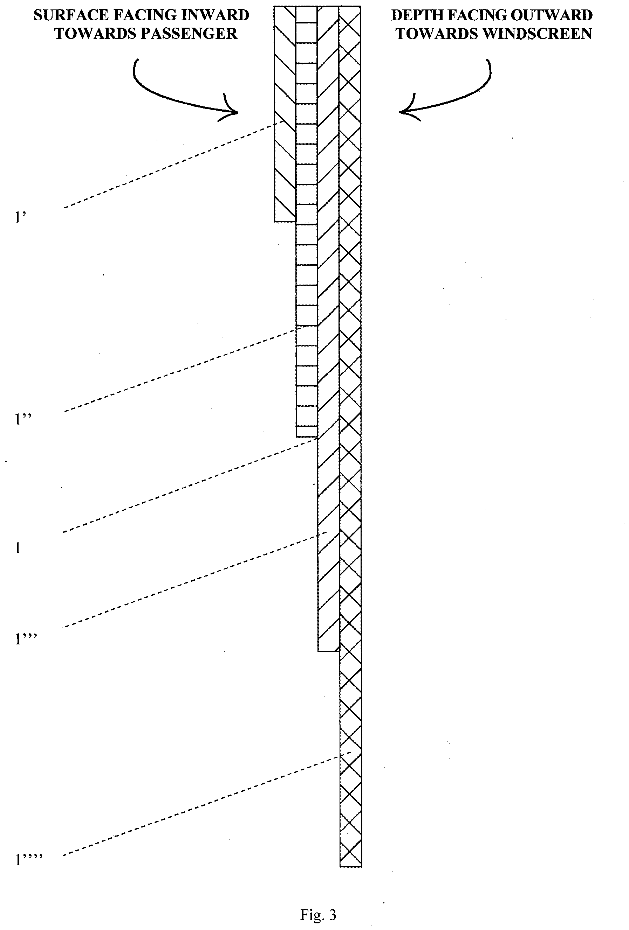

- Fig. 3 - Dynamically adjustable sunshade element, in the form of a stratified package of liquid crystals films dispersed between conductive layers of polymers (or *Polymer-Dispersed Liquid Crystal*)*,* construction detail, side view (right).

Sunshade system with dynamic adjustment for vehicles windscreen, is characterized mainly, in that is made of an assembly of electrical and electronic elements, consisting of a sunshade in the form of a layered package 1, comprising films with liquid crystals dispersed between conductive layers of polymers (or *Polymer-Dispersed Liquid Crystal*)*,* placed on the inner surface, in the upper area of vehicles windscreen, built unitarily of overlapping films in layers ordered successively from the surface facing inward, according to their vertical width, having horizontal lengths equal to the length of the windscreen and different vertical widths, so that the film 1', has the smallest width and is located at the surface towards the passenger, the film 1 "", has the largest width and is located in the depth towards the windscreen, and the other films 1", 1"', have intermediate widths and depths, established through equal distribution, between the shortest film 1', and the longest film 1"", for obtaining a shutter cascade in which the film 1', is above and shorter than the film 1 ", which is above and shorter than the film 1"', which is above and shorter than the film 1"", together with a button for control and command 2, with six possible positions, together with a sensor for sun altitude angle 3, located in the upper and central part of the windscreen, without overlapping with other elements, which senses through its construction and placement, the difference between the incidence angle of the sun's rays and the inclination angle of the vehicle on the road surface, with respect to the horizontal plane, and this assembly is in electrical connection with an electronic computer for control and command 4, that manages the power supply state of the shading system, adjusted in vertical steps overlapped in the same plane.

The invention assumes that when the button for control and command 2, is in position zero, 2' - the powering of films is completely stopped and the transparency of the layered package 1 is maximum, in position A, 2" - the powering of films is automatic and the transparency of the layered package 1 is variable depending on the sensor for sun altitude angle 3, in position B, 2'" - the power is turned on for film 1' and the transparency of the layered package 1 is minimum, in position C, 2"" - the power is turned on for films 1', 1", and the transparency of the layered package 1 is intermediate, in position D, 2""' - the power is turned on for films 1', 1", 1"' and the opacity of the layered package 1 is intermediate, or in position E, 2""" - the power is turned on completely for films 1', 1", 1'", 1"" and the opacity of the layered package 1 is maximum, and at the same time, in the case of selecting position A, 2", the electronic computer for control and command 4, manages the power supply state of the shading system, so that it associates the difference between the incidence angle of the sun's rays and the inclination angle of the vehicle on the road surface, with respect to the horizontal plane, provided by the sensor for sun altitude angle 3, inversely proportional to the integer value of the number of films 1', 1 ", 1‴, 1 "", in the system composition, for powering a smaller or larger number of films, which is why when the angle difference increases, fewer films are powered, and when the angle difference decreases, more films are powered, in the order of their vertical width, therefore a solar protection of the vision is ensured, thanks to a shade 5, arranged in gradient in the vertical plane of the passengers seated in front of the windscreen.

Sunshade system with dynamic adjustment for vehicles windscreen, according to the invention, can be reproduced with the same performances and characteristics whenever is necessary, for any application compatible with it or parts thereof, a fact that constitutes an argument in favor of meeting the criterion of industrial applicability.

## Claims

1. Sunshade element gradually adjustable, **characterized in that**, is made of a sunshade assembly in the form of a layered package (1), of films with liquid crystals dispersed between conductive layers of polymers, placed on the inner surface, in the upper area of vehicles windscreen, built of overlapping films in layers ordered successively from the surface facing inward, according to their vertical width, having horizontal lengths equal to the length of the windscreen and different vertical widths, so that the film (1'), has the smallest width and is located at the surface towards the passenger, and the film (1""), has the largest width and is located in the depth towards the windscreen, and the other films (1"), (1‴), have intermediate widths and depths.

2. Sunshade system with dynamic adjustment for vehicles windscreen, **characterized in that**, it consists of a sunshade element gradually adjustable, according to claim 1, together with a button for control and command (2), with six possible positions that controls the way the system works, manually, on multiple options or automatically, together with a sensor for sun altitude angle (3), located in the upper and central part of the windscreen, without overlapping with other elements, which senses through its construction and placement, the difference between the incidence angle of the sun's rays and the inclination angle of the vehicle on the road surface, and this assembly is controlled by an electronic computer for control and command (4), that manages the power supply state of the shading system, adjusted in vertical steps overlapped in the same plane.
